(19) Europäisches Patentamt
European Patent Office
Office européen des brevets

(11) **EP 2 257 768 B1**

(12) **EUROPÄISCHE PATENTSCHRIFT**

(45) Veröffentlichungstag und Bekanntmachung des Hinweises auf die Patenterteilung:
**22.05.2013 Patentblatt 2013/21**

(21) Anmeldenummer: **09721085.0**

(22) Anmeldetag: **05.02.2009**

(51) Int Cl.:
**G01D 5/14** *(2006.01)* **G01D 11/24** *(2006.01)*

(86) Internationale Anmeldenummer:
**PCT/EP2009/051308**

(87) Internationale Veröffentlichungsnummer:
**WO 2009/112314 (17.09.2009 Gazette 2009/38)**

(54) **WINKELMESSSYSTEM**

ANGLE MEASURING SYSTEM

SYSTÈME DE MESURE ANGULAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **10.03.2008 DE 102008013378**

(43) Veröffentlichungstag der Anmeldung:
**08.12.2010 Patentblatt 2010/49**

(73) Patentinhaber: **Dr. Johannes Heidenhain GmbH 83301 Traunreut (DE)**

(72) Erfinder: **MITTERREITER, Johann 83339 Chieming (DE)**

(56) Entgegenhaltungen:
**EP-A- 0 665 416 WO-A-95/14911 WO-A-2006/020201**

**Beschreibung**

Die Erfindung betrifft ein Winkelmesssystem gemäß dem Anspruch 1.

Derartige Winkelmesssysteme dienen zur Messung von Drehbewegungen bzw. Drehstellungen eines Maschinenteils, etwa einer Welle. Die Drehbewegung wird dabei entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in so genannten Pick-and-Place-Maschinen in der Fertigung von elektronischen Bauteilen verwendet, oder in Werkzeugmaschinen für die Messung von rotatorischen Bewegungen eingesetzt. Die Reproduzierbarkeit, bzw. Wiederholbarkeit der Drehwinkel von Maschinenteilen auf nur wenige Winkelsekunden genau ist beispielsweise bei Pick-and-Place-Maschinen von großer Bedeutung. Bei Werkzeugmaschinen ist insbesondere die absolute Genauigkeit der Messergebnisse eines Winkelmesssystems entscheidend. Es sind Winkelmesssysteme bekannt, die eine eigene Lagerung der relativ zueinander drehbaren Bauteile aufweisen.

Die Genauigkeit einer Winkelmessung wird wesentlich durch die Güte der Winkelskalierung, deren Exzentrizität und durch die Rundlauf-Abweichungen der Lagerung bzw. Taumelfehler beeinflusst.

In der Patentschrift US 6 894 484 ist ein Lager mit einer Winkelmesseinrichtung offenbart, bei welchem in einer durchgängig zylindrischen Ausnehmung des Außenrings eine Sensoreinheit als austauschbares Modul einsetzbar ist.

In der Patentschrift WO 02/01086 ist ein Lager mit einer Geschwindigkeitsmessvorrichtung offenbart, bei welchem ein Montagering, der die Sensoren zusammen mit der zugehörigen Elektronik enthält, in einer inneren Nut eines Außenringes eingefügt ist.

Diese bekannte Vorrichtung weist den Nachteil auf, dass die nach diesem Prinzip hergestellten Winkelmesssysteme nicht höchste Genauigkeiten erreichen, für viele Anwendungen nicht ausreichend robust sind und überdies relativ viel Bauraum benötigen.

Der Erfindung liegt die Aufgabe zugrunde, ein robustes Winkelmesssystem zu schaffen, welches sich insbesondere dadurch auszeichnet, dass in einfacher Bauweise ein sehr genau arbeitendes kompaktes Winkelmesssystem realisierbar ist.

Diese Aufgabe wird durch ein Winkelmesssystem gemäß dem Anspruch 1 gelöst. Demnach umfasst das Winkelmesssystem eine erste Bauteilgruppe und eine zweite Bauteilgruppe, wobei die erste Bauteilgruppe relativ zur zweiten Bauteilgruppe um eine Achse drehbar gelagert ist. Weiterhin weist die erste Bauteilgruppe einen Ring mit einer Lauffläche und eine Winkelskalierung auf. Die zweite Bauteilgruppe weist einen Sensor zur Abtastung der Winkelskalierung auf, sowie eine Leiterplatte mit einer elektronischen Schaltung zur Auswertung von durch die Abtastung erzeugbaren Signale des Sensors.

Die zweite Bauteilgruppe umfasst zudem einen massiven Ring an dem eine weitere Lauffläche angeordnet ist und weist überdies eine erste Ausnehmung zur Aufnahme der Leiterplatte auf. Ferner weist die zweite Bauteilgruppe zur Aufnahme eines elektrischen Leiters eine zweite Ausnehmung auf. Der elektrische Leiter ist vom Sensor beabstandet angeordnet und verbindet den Sensor mit der elektronischen Schaltung elektrisch.

In den massiven Ring der zweiten Bauteilgruppe sind also direkt Ausnehmungen in Form von Kammern eingearbeitet, wobei die Ausnehmungen unterschiedliche Volumina bzw. Rauminhalte aufweisen und insbesondere zu-sammenhängend angeordnet sind. Zur Optimierung der Festigkeit des Rings weichen Geometrien der Ausnehmungen von zylindrischen Formen ab.

Dabei ist eine Ausdehnung der ersten Ausnehmung des Rings der zweiten Bauteilgruppe in einer Richtung parallel zur Achse größer als eine Ausdehnung der ersten Ausnehmung in Umfangsrichtung. Insbesondere ist die größte Ausdehnung der ersten Ausnehmung in einer Richtung parallel zur Achse größer als die größte Ausdehnung der ersten Ausnehmung in Umfangsrichtung.

Im Übrigen sind die Laufflächen diejenigen Flächen bzw. Bahnen, entlang welcher die Wälzkörper im Betrieb des Winkelmesssystems abrollen. Die Laufflächen des Rings der ersten Bauteilgruppe können aus achsparalleler Sicht konvex ausgebildet sein, während die Laufflächen des Rings der zweiten Bauteilgruppe konkav sein können.

Gemäß einer bevorzugten Bauweise des Winkelmesssystems ist der Ring der ersten Bauteilgruppe radial innen liegend und kann dann auch als Innenring bezeichnet werden, während der Ring der zweiten Bauteilgruppe in diesem Fall radial außen liegend angeordnet ist und als Außenring definiert werden kann.

Der Ring der zweiten Bauteilgruppe weist ein axiales Außenmaß auf, welches mit Vorteil mindestens 1,5-mal so groß ist als die Ausdehnung der ersten Ausnehmung des Rings der zweiten Bauteilgruppe in einer Richtung parallel zur Achse. Insbesondere kann das axiale Außenmaß des betreffenden Rings mindestens 1,75-mal oder mindestens 2-mal so groß sein als die Ausdehnung der ersten Ausnehmung des Rings der zweiten Bauteilgruppe in einer Richtung parallel zur Achse.

Mit Vorteil weist der Ring der zweiten Bauteilgruppe eine dritte Ausnehmung zur Aufnahme des Sensors auf.

Insbesondere im Hinblick auf eine störungsunanfällige Bauweise des Winkelmesssystems, ist der Ring der zweiten Bauteilgruppe mit Vorteil als ein metallischer Ring, insbesondere als ein Stahl-Ring, ausgestaltet.

In Weiterbildung der Erfindung ist die Ausdehnung der ersten Ausnehmung größer als die Ausdehnung der zweiten Ausnehmung, jeweils bezogen auf eine Richtung parallel zur Achse. Dies gilt insbesondere für die jeweils größten Ausdehnungen der zweiten Ausnehmung.

Der elektrische Leiter kann einen Querschnitt mit unterschiedlichen Außenmaßen aufweisen, beispielsweise einen Rechteckquerschnitt, der naturgemäß zwei unterschiedliche Kantenlängen als jeweiliges Außenmaß aufweist. Dabei ist das größere Außenmaß in einer Richtung parallel zur Achse angeordnet. Die gleiche Betrachtung kann beispielsweise auch auf Leiter mit elliptischem Querschnitt angewendet werden.

Die erste Ausnehmung ist so ausgestaltet , dass die Leiterplatte in radialer Richtung, insbesondere in einer Richtung zur Achse hin in die erste Ausnehmung eingeführt werden kann. Insbesondere weist die erste Ausnehmung eine Öffnung am Außenumfang des Ringes der zweiten Bauteilgruppe auf. Ferner kann die dritte Ausnehmung so ausgestaltet sein, dass der Sensor in einer Richtung von der Achse wegführend, radial nach außen in die dritte Ausnehmung eingeführt werden kann. Entsprechend kann dann die dritte Ausnehmung eine Öffnung am Innenumfang des Ringes der zweiten Bauteilgruppe aufweisen.

Mit Vorteil ist der Sensor, insbesondere ausschließlich, vor dem Zusammenbauen der ersten Bauteilgruppe, der zweiten Bauteilgruppe und der Wälzkörper an der zweiten Bauteilgruppe montierbar. Insbesondere kann auch der elektrische Leiter bereits vor dem Zusammenbauen der ersten Bauteilgruppe, der zweiten Bauteilgruppe und der Wälzkörper an der zweiten Bauteilgruppe montierbar sein.

Gemäß einem weiteren Aspekt der Erfindung umfasst das Winkelmesssystem eine erste Bauteilgruppe, eine zweite Bauteilgruppe und einen Sensor, wobei die erste Bauteilgruppe relativ zur zweiten Bauteilgruppe um eine Achse drehbar gelagert ist. Dabei weist die erste Bauteilgruppe einen Ring mit einer Lauffläche und mit einer Winkelskalierung auf. Die zweite Bauteilgruppe weist einen weiteren Ring mit einer weiteren Lauffläche und den Sensor zur Abtastung der Winkelskalierung auf. Zwischen den Laufflächen der ersten und der zweiten Bauteilgruppe sind Wälzkörper angeordnet. Die Winkelskalierung ist in der Weise aufgebracht, dass ein geometrisches Muster der Winkelskalierung in einem ersten Bereich von einem geometrischen Muster der Winkelskalierung in einem zweiten Bereich in Abhängigkeit von Rundlaufabweichungen der Laufflächen und / oder der Wälzkörper abweicht.

Die geometrischen Muster der Winkelskalierung des Winkelmesssystems sind also unter anderem abhängig von den individuellen Maßen bzw. Maßabweichungen der jeweiligen im Winkelmesssystem vorliegenden Laufflächen und / oder der Wälzkörper.

Die Winkelskalierung kann auf einer Komponente der ersten Bauteilgruppe aufgebracht sein, wobei die Komponente dann als ein separates Bauteil, etwa als ein Teilungsring, mit dem Ring drehfest verbunden sein kann oder aber als integraler Bestandteil des Ringes der ersten Bauteilgruppe ausgestaltet sein kann. Letzteres trifft etwa dann zu, wenn die Winkelskalierung direkt auf dem Ring aufgebracht ist.

Mit Vorteil weist der Ring der zweiten Bauteilgruppe eine radial durchgängige Öffnung auf, durch welche die Winkelskalierung aufbringbar ist. Dabei kann die Öffnung so ausgestaltet sein, dass diese eine axiale Ausdehnung aufweist, die weniger als 1/3, insbesondere weniger als 1/5, des axialen Außenmaßes des Rings der zweiten Bauteilgruppe beträgt.

Mit Vorteil ist die Winkelskalierung an einer Mantelseite des Teilungsrings angeordnet. Unter dem Begriff Mantelseite ist eine zylindrische Oberfläche bzw. Umfangsfläche zu verstehen, die entweder um 360° geschlossen ist oder nur einen Teil einer Umfangsfläche darstellt. Die Winkelskalierung kann dann mit einer Richtungskomponente parallel zur Achse ausgerichtet sein.

Die Winkelskalierung und der Sensor können beispielsweise für eine magnetische, induktive oder kapazitive Abtastung eingerichtet sein.

Häufig besteht die Winkelskalierung aus Bereichen mit unterschiedlicher magnetischer Polarisierung. In diesem Fall sind dann die magnetisierten

Bereiche mit einer Richtungskomponente parallel zur Achse ausgerichtet, so dass sich quasi als magnetische Teilungsstriche in Umfangsrichtung Nord-und Südpole abwechseln. Insbesondere kann die Winkelskalierung auch aus mehreren Spuren bestehen, beispielsweise wenn von der Winkelskalierung unmittelbar die absolute Winkellage einer zu messenden Welle ermittelbar sein soll.

Alternativ oder ergänzend zur im Wesentlichen axialen Ausrichtung der Winkelskalierung kann die Winkelskalierung auch mit einer radialen Richtungskomponente ausgerichtet sein. In diesem Fall wird zumindest ein Teil der Winkelskalierung stirnseitig auf die betreffende Komponente der ersten Bauteilgruppe aufgebracht.

In weiterer Ausgestaltung der Erfindung ist die Winkelskalierung auf einer Komponente, insbesondere einem Teilungsring, der ersten Bauteilgruppe aufgebracht, welche aus einem magnetisierbaren Material besteht. In vorteilhafter Weiterbildung der Erfindung kann der Teilungsring aus einem hartmagnetischen Material mit einer Koerzitivfeldstärke von mindestens 1 kA/m bestehen. Mit Vorteil beträgt die Koerzitivfeldstärke zwischen 10 kA/m und 60 kA/m, insbesondere zwischen 25 kA/m und 45 kA/m.

Als Sensor kann beispielsweise ein MR-Sensor oder ein Hall-Sensor verwendet werden.

Besonders gute Messgenauigkeiten des Winkelmesssystems werden erreicht, wenn die erste Bauteilgruppe und die zweite Bauteilgruppe, sowie die Wälzkörper so ausgestaltet sind, dass die erste Bauteilgruppe und die zweite Bauteilgruppe axial und / oder radial spielfrei zueinander angeordnet sind.

Mit Vorteil können die erste und die zweite Bauteilgruppe jeweils zwei Laufflächen aufweisen zwischen denen jeweils Wälzkörper angeordnet sind. Die Winkelskalierung sowie die Öffnung, durch welche die Winkelskalierung aufbringbar ist, können dann axial zwischen diesen Laufflächen angeordnet sein.

Mit Vorteil ist das Winkelmesssystem so ausgestaltet, dass dessen maximale axiale Ausdehnung weniger als 40 %, insbesondere weniger als 30 % des maximalen Außenradius des Winkelmesssystems beträgt. Weiterhin ist es vorteilhaft, wenn das Winkelmesssystem eine relativ große Öffnung zur Aufnahme einer zu messenden Welle aufweist, wobei der Radius der Öffnung mit Vorteil mindestens 50 %, insbesondere mindestens 60 % des maximalen Außenradius des Winkelmesssystems beträgt. Diese Öffnung wird beispielsweise durch den Innendurchmesser des Innenrings begrenzt, während dann der Außenradius des Außenrings den Außenradius des Winkelmesssystems darstellt.

Vorteilhafte Ausführungsformen des erfindungsgemäßen Winkelmesssystems sind aus den Maßnahmen in den vom Anspruch 1 abhängigen Ansprüchen zu entnehmen.

Weitere Vorteile, sowie Einzelheiten des erfindungsgemäßen Winkelmesssystems ergeben sich aus der nachfolgenden Beschreibung eines Ausführungsbeispiels anhand der beiliegenden Figuren.

Es zeigen die

Figur 1     eine Teilschnittansicht durch ein Winkelmesssystem,

Figur 2     eine Teil-Draufsicht auf einen Ring des Winkelmesssystems mit einer Winkelskalierung,

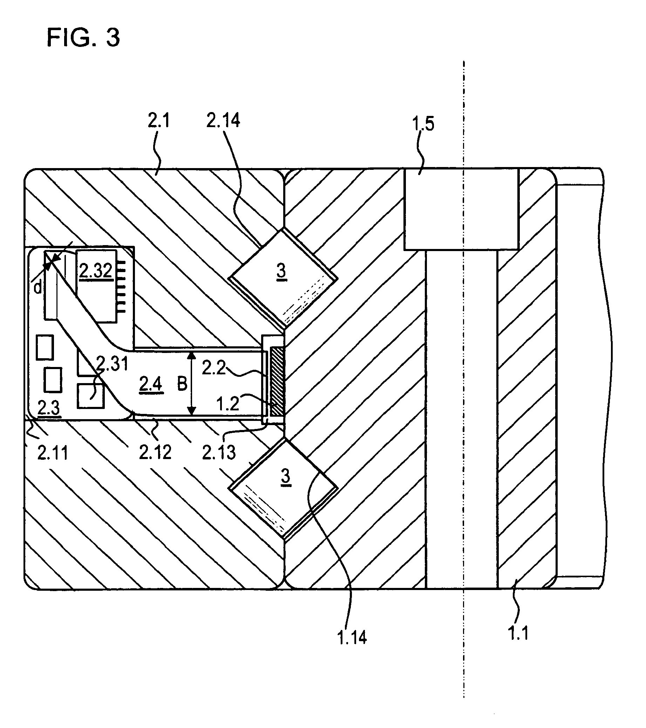

Figur 3     eine Schnittdarstellung durch das Winkelmesssystem,

Figur 4a     eine Draufsicht auf einen Teil des Winkelmesssystems,

Figur 4b     eine Seitenansicht auf einen Teilbereich des Winkelmesssystems.

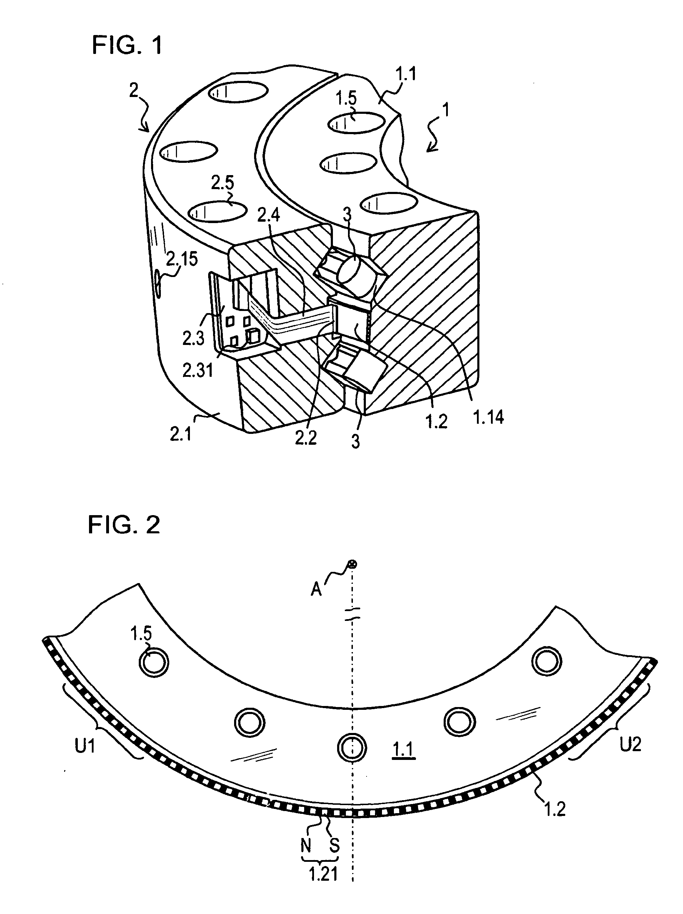

Gemäß der Figur 1 umfasst das erfindungsgemäße Winkelmesssystem eine erste Bauteilgruppe 1 und eine zweite Bauteilgruppe 2, wobei im vorgestellten Ausführungsbeispiel die erste Bauteilgruppe 1 als Rotor und die zweite Bauteilgruppe 2 als Stator dienen. Die erste Bauteilgruppe 1 umfasst einen Ring, der im vorliegenden Ausführungsbeispiel als Innenring 1.1 bezeichnet wird. Entsprechend wird ein weiterer Ring, welcher der zweiten Bauteilgruppe 2 zuzuordnen ist, hier als Außenring 2.1 benannt.

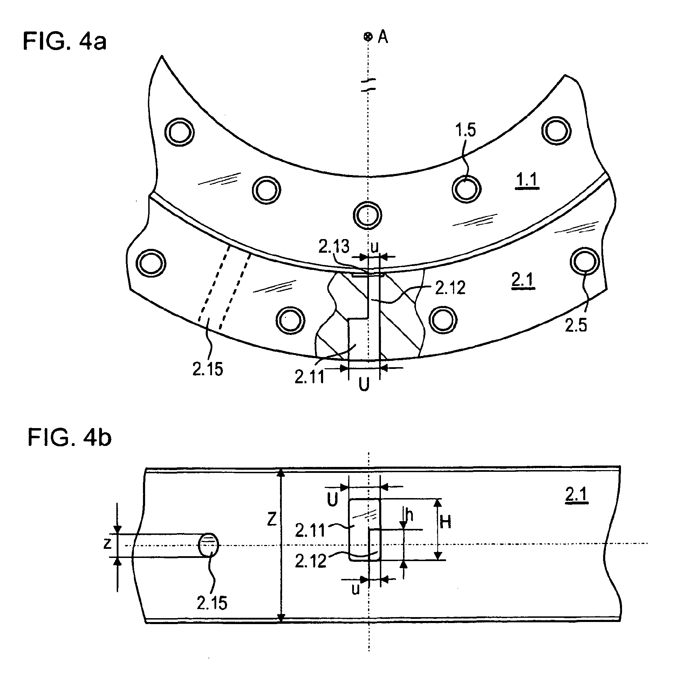

Bei dem neuen Verfahren zur Herstellung eines Winkelmesssystems werden zunächst der Innenring 1.1 und der Außenring 2.1 hergestellt. Dabei werden die Konturen anfangs vergleichsweise grob spanabtragend herausgearbeitet. Das axiale Außenmaß Z (siehe Figur 4b) des Außenrings 2.1 beträgt im vorliegenden Ausführungsbeispiel 70 mm. Weiterhin wird in den Außenring 2.1 eine radial ausgerichtete Öffnung 2.15, hier in Form einer zylindrischen Bohrung, eingearbeitet. Die axiale Ausdehnung z der Öffnung 2.15, bzw. der Durchmesser der Bohrung beträgt hier 10 mm, so dass sich also hier ein Verhältnis $z/Z = {}^1\!/_7$ ergibt. In dieser Herstellungsphase wird zudem in den Außenring 2.1 ein Hohlraum eingearbeitet, der drei Kammern, bzw. drei Ausnehmungen 2.11, 2.12. 2.13 umfasst. Dabei weist die radial äußerste Ausnehmung 2.11 das größte Volumen auf. Die weiter innen liegende Ausnehmung 2.12 verbindet die beiden benachbarten Ausnehmungen 2.11 und 2.13.

In einem weiteren Schritt werden am Innenring 1.1 und am Außenring 2.1 jeweils fein bearbeitete Laufflächen 1.14, 2.14 durch einen Läppprozess erzeugt.

Im Zuge der weiteren Montage wird dann zunächst ein Sensor 2.2, z.B. ein MR-Sensor, mit einem elektrischen Leiter 2.4, hier ein Flexleiter im Außenring 2.1 montiert. Der elektrische Leiter 2.4 weist einen rechteckförmigen Querschnitt auf und hat demnach unterschiedliche Außenmaße B, d. Dabei ist die Dicke d im Verhältnis zur Breite B relativ gering. Bei der Montage wird der elektrische Leiter 2.4 von der Innenseite des Außenrings 2.1 her in die dritte Ausnehmung 2.13 eingeführt, wobei das größere Außenmaß B des elektrischen Leiters 2.4 in einer Richtung parallel zur Achse A angeordnet ist. Danach werden der Sensor 2.2 und der elektrische Leiter 2.4 radial nach außen bewegt, bis der Sensor 2.2 in der dritten Ausnehmung 2.13 platziert ist und der elektrische Leiter 2.4 durch die zweite Ausnehmung 2.12 hindurch in die erste Ausnehmung 2.11 ragt. Entsprechend ist die dritte Ausnehmung 2.13 also so ausgestaltet ist, dass der Sensor 2.2 in einer Richtung von der Achse A wegführend in die Ausnehmung 2.11 eingeführt werden kann.

Als nächstes wird das Ende des elektrischen Leiters 2.4 radial nach außen gezogen, so dass sich dieses außerhalb des Außenrings 2.1 befindet. In dieser Stellung wird dieses Ende des elektrischen Leiters 2.4 dann mit einer elektrischen Kupplung 2.32 auf einer Leiterplatte 2.3 verbunden. Auf der Leiteplatte 2.3 befinden sich mehrere elektronische Bauteile, unter anderem eines mit einer elektronischen Schaltung 2.31 zur Auswertung von Signalen des Sensors 2.2.

Die erste Ausnehmung 2.11 ist radial nach außen hin offen, also so ausgestaltet, dass die Leiterplatte 2.3 in einer Richtung zur Achse A hin in die Ausnehmung 2.11 eingeführt werden kann. Entsprechend wird also die Leiterplatte 2.3 in die erste Ausnehmung 2.11 eingeführt und wird dann in der ersten Ausnehmung 2.11 fixiert. Dabei ist die Leiterplatte 2.3 so orientiert, dass diese parallel zur Achse A ausgerichtet ist, also die Ebene der Leiterplatte 2.3 parallel zur Achse A ist.

Weiterhin wird auf den Außenumfang des Innenrings 1.1 ein Teilungsring 1.2 montiert. Dieser Teilungsring 1.2 besteht aus einem hartmagnetischen Material, hier eine Eisen-Cobalt-Chrom-Legierung mit einer Koerzitivfeldstärke von etwa 38 kA/m. Der Teilungsring 1.2 weist in dieser Phase keine Winkelskalierung 2.11 bzw. kein Teilungsmuster auf.

Danach werden nun der Innenring 1.1 samt dem Teilungsring 1.2 und der Außenring 2.1 sowie die Wälzkörper 3 so zusammengebaut, dass die Wälzkörper 3 zwischen beiden Laufflächen 1.14, 2.14 angeordnet sind. Infolge der geometrischen Maße des Innenrings 1.1 der Wälzkörper 3 und des Außenrings 2.1 wird eine radiale und axiale Vorspannung zwischen dem Innenring 1.1 und dem Außenring 2.1 erzeugt. Somit ist eine Anordnung hergestellt, bei der die erste Bauteilgruppe 1 relativ zur zweiten Bauteilgruppe 2 um eine Achse A drehbar ist, wobei die Bauteilgruppen 1, 2 durch die axiale und radiale Vorspannung axial und radial spielfrei zueinander angeordnet sind. Dadurch, dass die Leiterplatte 2.3 mit der elektronischen Schaltung 2.31 in der ersten Ausnehmung 2.11 durch den massiven Außenring 2.1 umgeben ist, ist ein optimaler Schutz gegen elektromagnetische Störungen gegeben. Das gleiche gilt auch für den elektrischen Leiter 2.4 in der zweiten Ausnehmung 2.12 und für den Sensor 2.2 in der dritten Ausnehmung 2.13. Zu beachten ist in diesem Zusammenhang, dass durch die präzise Herstellung des Außenrings 2.1, der Wälzkörper 3 und des Innenrings 1.1 ein minimaler Spalt zwischen dem Außenring 2.1 und dem Innenring 1.1 erreicht wird, was sich für die elektromagnetische Störungsunanfälligkeit positiv auswirkt. Zur weiteren Erhöhung der elektromagnetischen Störungsunanfälligkeit kann die erste Ausnehmung 2.11 an der Außenseite mit einem Deckel, insbesondere mit einem Metalldeckel verschlossen werden. Weiterhin kann die erste Ausnehmung 2.11 und ggf. auch die zweite und dritte Ausnehmung 2.12, 2.13 mit einem geeignetem Vergussmaterial gefüllt werden. Ein Kabelabgang kann beispielsweise durch eine Bohrung im Deckel hindurch realisiert werden, zur elektrischen Verbindung zwischen dem Winkelmesssystem und einer Folgeelektronik.

Die soweit montierte Einheit wird nunmehr an einer Teilungsmaschine befestigt. Die Teilungsmaschine dient dazu eine Winkelskalierung 1.21 (Fig. 2) auf den Teilungsring 1.2 aufzubringen. Die Teilungsmaschine umfasst eine Welle und einen Statorblock, an dem ein magnetischer Schreibkopf befestigt ist. Der Statorblock und die Welle sind unter Verwendung eines Luftlagers relativ zueinander drehbar. Zur Teilungsmaschine gehört weiterhin eine überaus exakte Winkelmesseinrichtung, die dazu dient, die Winkellage der Welle gegenüber dem Statorblock genau zu bestimmen.

Vor dem Aufbringen der Winkelskalierung 1.21 wird zunächst der Innenring 1.1 an der Welle der Teilungsmaschine drehfest festgelegt. Ebenso wird auch der Außenring 2.1 am Statorblock fixiert. In diesem Montagezustand bewirkt folglich eine Drehung der Welle eine Drehung des Innenrings 1.1 und damit auch des Teilungsrings 1.2.

Danach wird in die Öffnung 2.15 der magnetische Schreibkopf eingeführt. Sodann wird die Winkelskalierung 1.21, bestehend aus einer Vielzahl von magnetischen (nicht sichtbaren) Teilungsstrichen, unmittelbar auf die Mantelseite des Teilungsrings 1.2 aufgebracht. Dabei werden schrittweise durch entsprechende Bestromung des Schreibkopfes auf der Mantelseite zur Achse A im Wesentlichen parallele Teilungsstriche als Winkelskalierung 1.21 erzeugt, wobei sich Nord- und Südpole entlang des Umfangs abwechseln. Jeder Teilungsstrich ist dabei radial polarisiert. Im vorgestellten Ausführungsbeispiel beträgt der Abstand der Mitten der Teilungsstriche in Umfangsrichtung 200 μm. Es wird hierbei nach jedem erzeugten Teilungsstrich auf der Mantelseite des Teilungsrings 1.2 die Welle minimal weitergedreht, so dass der nächste Teilungsstrich aufgebracht werden kann. Zwischen den jeweiligen Magnetisierungsschritten wird also der Teilungsring 1.2, kontrolliert durch die Winkelmesseinrichtung der Teilungsmaschine, um die Achse A weitergeschwenkt. Trotzt der überaus präzisen Herstellung des Innenrings 1.1, des Außenrings 2.1 und der Wälzkörper 3 weist die Anordnung naturgemäß noch Abweichungen von ihrer Idealgeometrie auf. Entsprechend führen Rundlaufabweichungen zu in Umfangsrichtung unterschiedlichen geometrischen Mustern der Winkelskalierung 1.21, weil die Winkelskalierung 1.21 auf dem Teilungsring 1.2 in einer Anbausituation aufgebracht ist, die der endgültigen Lagerung entspricht und zudem die Anordnung radial und axial vorgespannt ist. So kann auf Grund der genannten Rundlaufabweichungen, z. B. einer Exzentrizität oder eines Taumelfehlers, das geometrische Muster der Winkelskalierung 1.21 im Bereich U1 von dem Muster im Bereich U2 abweichen, und zwar abhängig von den lokal an den jeweiligen Umfangspunkten vorliegenden Rundlaufabweichung. Im Ergebnis können unterschiedliche Muster durch unterschiedliche Abstände der Teilungsstriche oder durch unterschiedliche Neigungen der Teilungsstriche gegenüber der Achse A charakterisiert sein. Wegen des hohen Maßes an Präzision sind diese Unterschiede in den Mustern einzelner Bereiche vergleichsweise gering. Dennoch tragen sie zur Erhöhung der Messgenauigkeit des Winkelmesssystems bei.

Nachdem die Winkelskalierung 1.21 aufgebracht ist, kann die soweit vormontierte Einheit, bestehend aus der ersten und der zweiten Bauteilgruppe 1, 2 von der Teilungsmaschine demontiert werden.

Durch die überaus hohe mechanische Steifigkeit des Winkelmesssystems wird das Messergebnis einerseits wegen des minimalen Spalts zwischen dem Außenring 2.1 und dem Innenring 1.1 verbessert, andererseits kann dadurch auch ein kleiner und stets konstanter Abtastabstand zwischen dem Sensor 2.2 und dem Teilungsring 1.2 verwirklicht werden, so dass eine erhöhte Signalqualität erreichbar ist. Erst durch diese Maßnahmen ist es möglich mit hoher Auflösung magnetische Winkelskalierungen 1.21 auszulesen, die Abstände zwischen den Mitten der Teilungsstriche in Umfangsrichtung von weniger als 300 μm, insbesondere weniger als 250 μm oder weniger als 200 μm aufweisen.

Einen wesentlichen Beitrag zur Erreichung der hohen mechanischen Steifigkeit des Winkelmesssystems liefert die spezielle Ausgestaltung der Ausnehmungen 2.11, 2.12, 2.13 und der Öffnung 2.15, wie sie in den Figuren 4a und 4b gezeigt ist. Zunächst wurde die Öffnung 2.15 so bemessen, dass deren Ausdehnung z vergleichsweise klein gegenüber der axialen Ausdehnung Z des Außenrings 2.1 ist. Des Weiteren sind die erste und die zweite Ausnehmung 2.11, 2.12 so ausgestaltet, dass deren jeweilige Ausdehnungen in Umfangsrichtung U, u kleiner sind als deren axiale Ausdehnungen H, h, also U<H, u<h. Insbesondere weist die erste Ausnehmung 2.11 des Außenrings in einer Richtung parallel zur Achse A ihre größte Ausdehnung H auf. Ferner ist der Außenring 2.1 so dimensioniert, dass die Ausdehnung H der ersten Ausnehmung 2.11 größer ist als die Ausdehnung h der zweiten Ausnehmung 2.12 (H>h), jeweils bezogen auf eine Richtung parallel zur Achse A. Weiterhin ist die Ausdehnung U der ersten Ausnehmung 2.11 größer als die Ausdehnung u der zweiten Ausnehmung 2.12 (U>u), jeweils bezogen auf die Umfangsrichtung.

Das Winkelmesssystem stellt eine selbstständige Einheit dar, die vom Anwender einfach an einer zu messenden Welle montiert werden kann aber überaus exakte Winkelpositionen liefert. Auf Grund der überaus präzisen Ausgestaltung des Winkelmesssystems kann auf eine Ausgleichskupplung verzichtet werden.

Im Betrieb des Winkelmesssystems liefert der Sensor 2.2 entsprechend der dem Sensor 2.2 gegenüber liegenden Pole der Winkelskalierung 1.21 positionsabhängige Ströme bzw. Spannungen. Diese Ströme bzw. Spannungen werden in der elektronischen Schaltung 2.31 verarbeitet und letztlich digitalisiert. Die digitalen Signale können dann vom Winkelmesssystem an eine Folgeelektronik weitergeleitet werden, wobei durch die Digitalisierung eine weitgehend störungsunanfällige Datenübertragung ermöglicht ist.

Durch die integrierte Bauweise ist ferner das Winkelmesssystem sehr kompakt in seinen Außenmaßen und weist insbesondere eine überaus kleine maximale axiale Ausdehnung Z auf. Im gezeigten Ausführungsbeispiel beträgt die axiale Ausdehnung Z nur etwa 25 % des maximalen Außenradius. Des Weiteren wird durch die vorgestellte Bauweise ein hochwertiges Winkelmesssystem geschaffen, welches für große Durchmesser der zu messenden Wellen geeignet ist. So weist das hier vorgestellte Winkelmesssystem eine entsprechende Öffnung auf, deren Innenradius etwa 66% des maximalen Außenradius ausmacht.

**Patentansprüche**

1. Winkelmesssystem, umfassend eine erste Bauteilgruppe (1) und eine zweite Bauteilgruppe (2), wobei die erste Bauteilgruppe (1) relativ zur zweiten Bauteilgruppe (2) um eine Achse (A) drehbar gelagert ist und

   - die erste Bauteilgruppe (1) einen Ring (1.1) mit einer Lauffläche (1.14) und eine Winkelskalierung (1.21) aufweist,
   - die zweite Bauteilgruppe (2) einen Sensor (2.2) zur Abtastung der Winkelskalierung (1.2) aufweist, sowie eine Leiterplatte (2.3) mit einer elektronischen Schaltung (2.31) zur Auswertung von durch die Abtastung erzeugbaren Signalen des Sensors (2.2), wobei die zweite Bauteilgruppe (2) einen massiven Ring (2.1) umfasst,
   - an dem eine weitere Lauffläche (2.14) angeordnet ist und
   - welcher eine erste Ausnehmung (2.11) zur Aufnahme der Leiterplatte (2.3) sowie eine zweite Ausnehmung (2.12) zur Aufnahme eines elektrischen Leiters (2.4) aufweist, wobei

   Wälzkörper (3) zwischen beiden Laufflächen (1.14, 2.14) angeordnet sind und der Leiter (2.4) den Sensor (2.2) mit der vom Sensor (2.2) beabstandet angeordneten elektronischen Schaltung (2.31) elektrisch verbindet und
   die erste Ausnehmung (2.11) eine Öffnung am Außenumfang des Ringes (2.1) aufweist und die erste Ausnehmung (2.11) so ausgestaltet ist, dass die Leiterplatte (2.3) in einer Richtung zur Achse (A) hin in die erste Ausnehmung (2.11) einführbar ist, wobei eine Ausdehnung (H) der ersten Ausnehmung (2.11) des Rings (2.1) der zweiten Bauteilgruppe (2) in einer Richtung parallel zur Achse (A) größer ist, als eine Ausdehnung (U) der ersten Ausnehmung (2.11) in Umfangsrichtung.

2. Winkelmesssystem gemäß dem Anspruch 1, wobei der Ring (2.1) der zweiten Bauteilgruppe (2) eine dritte Ausnehmung (2.13) zur Aufnahme des Sensors (2.2) aufweist.

3. Winkelmesssystem gemäß einem der vorhergehenden Ansprüche, wobei der Ring (2.1) der zweiten Bauteilgruppe (2) als ein metallischer Ring, insbesondere als ein Stahl-Ring, ausgestaltet ist.

4. Winkelmesssystem gemäß einem der vorhergehenden Ansprüche, wobei die Ausdehnung (H) der ersten Ausnehmung (2.11) größer ist als die Ausdehnung (h) der zweiten Ausnehmung (2.12), jeweils bezogen auf eine Richtung parallel zur Achse (A).

5. Winkelmesssystem gemäß einem der vorhergehenden Ansprüche, wobei der elektrische Leiter (2.4) einen Querschnitt mit unterschiedlichen Außenmaßen (B, d) aufweist, wobei das größere Außenmaß (B) des elektrischen Leiters (2.4) in einer Richtung parallel zur Achse (A) angeordnet ist.

6. Winkelmesssystem gemäß einem der vorhergehenden Ansprüche, wobei der Ring (2.1) der zweiten Bauteilgruppe (2) eine dritte Ausnehmung (2.13) zur Aufnahme des Sensors (2.2) aufweist und die dritte Ausnehmung (2.13) so ausgestaltet ist, dass der Sensor (2.2) in einer Richtung von der Achse (A) wegführend in die dritte Ausnehmung (2.13) einführbar ist.

7. Winkelmesssystem gemäß einem der vorhergehenden Ansprüche, wobei die Winkelskalierung (2.12) mit einer Richtungskomponente parallel zur Achse (A) ausgerichtet ist.

8. Winkelmesssystem gemäß einem der vorhergehenden Ansprüche, wobei die Winkelskalierung (1.2) aus Bereichen mit unterschiedlicher magnetischer Polarisierung besteht.

9. Winkelmesssystem gemäß dem Anspruch 8, wobei der Sensor (2.2) als MR-Sensor oder als Hall-Sensor ausgestaltet ist.

10. Winkelmesssystem gemäß einem der vorhergehenden Ansprüche, wobei die erste Bauteilgruppe (1) und die zweite Bauteilgruppe (2), sowie die Wälzkörper (3) so ausgestaltet sind, dass die erste Bauteilgruppe (1) und die zweite Bauteilgruppe (2) axial spielfrei zueinander angeordnet sind.

11. Winkelmesssystem gemäß einem der vorhergehenden Ansprüche, wobei die erste Bauteilgruppe (1) und die zweite Bauteilgruppe (2) jeweils zwei Laufflächen (1.14, 2.14) aufweisen zwischen denen jeweils Wälzkörper (3) angeordnet sind, wobei die Winkelskalierung (1.21) axial zwischen diesen Laufflächen (1.14, 2.14) angeordnet ist.

**Claims**

1. Angle measuring system comprising a first assembly (1) and a second assembly (2), in which the first assembly (1) is supported rotatably about an axis (A) relative to the second assembly (2), and

- the first assembly (1) has a ring (1.1) with a running surface (1.14) and an angular scale (1.21),
- the second assembly (2) has a sensor (2.2) for scanning the angular scale (1.2), and a printed circuit board (2.3) with an electronic circuit (2.31) for evaluating signals of the sensor (2.2) which can be generated by the scanning, in which the second assembly (2) comprises a massive ring (2.1),
- on which a further running surface (2.14) is arranged, and
- which has a first cutout (2.11) for accommodating the printed circuit board (2.3) and a second cutout (2.12) for accommodating an electric conductor (2.4), in which

rolling elements (3) are arranged between the two running surfaces (1.14, 2.14) and the conductor (2.4) connects the sensor (2.2) electrically to the electronic circuit (2.31) arranged at a spacing from the sensor (2.2), and

the first cutout (2.11) has an opening at the outer circumference of the ring (2.1), and the first cutout (2.11) is configured such that the printed circuit board (2.3) can be introduced into the first cutout (2.11) in a direction towards to the axis (A), and in which

an extent (H) of the first cutout (2.11) of the ring (2.1) of the second assembly (2) is larger in a direction parallel to the axis (A) than an extent (U) of the first cutout (2.11) in a circumferential direction.

2. Angle measuring system according to Claim 1, in which the ring (2.1) of the second assembly (2) has a third cutout (2.13) for accommodating the sensor (2.2).

3. Angle measuring system according to one of the preceding claims, in which the ring (2.1) of the second assembly (2) is configured as a metal ring, in particular as a steel ring.

4. Angle measuring system according to one of the preceding claims, in which the extent (H) of the first cutout (2.11) is larger than the extent (h) of the second cutout (2.12), referred respectively to a direction parallel to the axis (A).

5. Angle measuring system according to one of the preceding claims, in which the electric conductor (2.4) has a cross section with different outer dimensions (B, d), the larger outer dimension (B) of the electric conductor (2.4) being arranged in a direction parallel to the axis (A).

6. Angle measuring system according to one of the preceding claims, in which the ring (2.1) of the second assembly (2) has a third cutout (2.13) for accommodating the sensor (2.2), and the third cutout (2.13) is configured such that the sensor (2.2) can be introduced into the third cutout (2.13) in a direction leading away from the axis (A).

7. Angle measuring system according to one of the preceding claims, in which the angular scale (2.12) is aligned with a direction component parallel to the axis (A).

8. Angle measuring system according to one of the preceding claims, in which the angular scale (1.2) consists of regions with different magnetic polarization.

9. Angle measuring system according to Claim 8, in which the sensor (2.2) is configured as an MR sensor or as a Hall sensor.

10. Angle measuring system according to one of the preceding claims, in which the first component (1) and the second component (2), as well as the rolling elements (3), are configured such that the first component (1) and the second component (2) are arranged axially without play relative to one another.

11. Angle measuring system according to one of the preceding claims, in which the first component (1) and the second component (2) respectively have two running surfaces (1.14, 2.14) between which rolling elements (3) are respectively arranged, the angular scale (1.21) being arranged axially between these running surfaces (1.14, 2.14).

**Revendications**

1. Système de mesure angulaire, comportant un premier groupe de composants (1) et un deuxième groupe de composants (2), le premier groupe de composants (1) étant monté rotatif autour d'un axe (A) par rapport au deuxième groupe de composants (2) et

- le premier groupe de composants (1) comprenant une bague (1.1) dotée d'une surface de roulement (1.14) et une graduation angulaire (1.21),
- le deuxième groupe de composants (2) comprenant un capteur (2.2) pour le balayage de la graduation angulaire (1.2) ainsi qu'une carte de circuits imprimés (2.3) comportant un circuit électronique (2.31) pour évaluer des signaux du capteur (2.2) pouvant être générés par le balayage,
le deuxième groupe de composants (2) comportant une bague massive (2.1)
- sur laquelle est disposée une autre surface de roulement (2.14) et
- qui comprend un premier évidement (2.11) pour recevoir la carte de circuits imprimés (2.3) ainsi qu'un deuxième évidement (2.12) pour recevoir un conducteur électrique (2.4),

des corps de roulement (3) étant disposés entre les deux surfaces de roulement (1.14, 2.14) et le conducteur (2.4) connectant électriquement le capteur (2.2) au circuit électronique (2.31) disposé à distance du capteur (2.2) et le premier évidement (2.11) comprenant une ouverture sur la périphérie extérieure de la bague (2.1) et le premier évidement (2.11) étant configuré de telle sorte que la carte de circuits imprimés (2.3) puisse être insérée dans le premier évidement (2.11) dans un sens en direction de l'axe (A),

une dimension (H) du premier évidement (2.11) de la bague (2.1) du deuxième groupe de composants (2) étant supérieure dans une direction parallèle à l'axe (A) à une dimension (U) du premier évidement (2.11) dans la direction périphérique.

2. Système de mesure angulaire selon la revendication 1, dans lequel la bague (2.1) du deuxième groupe de composants (2) comprend un troisième évidement (2.13) pour recevoir le capteur (2.2).

3. Système de mesure angulaire selon l'une quelconque des revendications précédentes, dans lequel la bague (2.1) du deuxième groupe de composants (2) est configurée en tant que bague métallique, en particulier en tant que bague en acier.

4. Système de mesure angulaire selon l'une quelconque des revendications précédentes, dans lequel la dimension (H) du premier évidement (2.11) est supérieure à la dimension (h) du deuxième évidement (2.12), à chaque fois par rapport à une direction parallèle à l'axe (A).

5. Système de mesure angulaire selon l'une quelconque des revendications précédentes, dans lequel le conducteur électrique (2.4) présente une section transversale de dimensions extérieures (B, d) différentes, la plus grande dimension extérieure (B) du conducteur électrique (2.4) étant disposée dans une direction parallèle à l'axe (A).

6. Système de mesure angulaire selon l'une quelconque des revendications précédentes, dans lequel la bague (2.1) du deuxième groupe de composants (2) comprend un troisième évidement (2.13) pour recevoir le capteur (2.2) et le troisième évidement (2.13) est configuré de telle sorte que le capteur (2.2) puisse être inséré dans le troisième évidement (2.13) dans un sens s'éloignant de l'axe (A).

7. Système de mesure angulaire selon l'une quelconque des revendications précédentes, dans lequel la graduation angulaire (2.12) est orientée avec une composante directionnelle parallèle à l'axe (A).

8. Système de mesure angulaire selon l'une quelconque des revendications précédentes, dans lequel la graduation angulaire (1.2) est constituée de régions de polarisations magnétiques différentes.

9. Système de mesure angulaire selon la revendication 8, dans lequel le capteur (2.2) est configuré en tant que capteur magnétorésistif ou en tant que capteur de Hall.

10. Système de mesure angulaire selon l'une quelconque des revendications précédentes, dans lequel le premier groupe de composants (1) et le deuxième groupe de composants (2) ainsi que les corps de roulement (3) sont configurés de telle sorte que le premier groupe de composants (1) et le deuxième groupe de composants (2) sont disposés axialement sans jeu l'un par rapport à l'autre.

11. Système de mesure angulaire selon l'une quelconque des revendications précédentes, dans lequel le premier groupe de composants (1) et le deuxième groupe de composants (2) comprennent respectivement deux surfaces de roulement (1.14, 2.14) entre lesquelles sont disposés des corps de roulement (3) respectifs, la graduation angulaire (1.21) étant disposée axialement entre ces surfaces de roulement (1.14, 2.14).

## FIG. 1

## FIG. 2

FIG. 3

FIG. 4a

FIG. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6894484 B
- WO 0201086 A